# EUROPÄISCHE PATENTANMELDUNG

(11) **EP 4 678 444 A1**
(43) Veröffentlichungstag der Anmeldung: **14.01.2026**
(21) Anmeldenummer: 24188166.3
(22) Anmeldetag: 12.07.2024
(51) Int. Cl.: B60K 17/04, B60K 6/48

(54) **ANTRIEBSANORDNUNG, ACHSE UND ARBEITSMASCHINE**

(71) Anmelder: Deere & Company, Moline, IL 61265 (US)
(72) Erfinder: Mann, Manuel, Mannheim (DE); Lang, Matthias, Mannheim (DE); Raisch, Stefan, Mannheim (DE); Buhrke, Frank, Mannheim (DE); Gugel, Rainer, Mannheim (DE)
(74) Vertreter: Stein, Stefan

(57) **Zusammenfassung**

Die Erfindung betrifft eine Antriebsanordnung (22) für eine Arbeitsmaschine (10). Die Antriebsanordnung (22) umfasst eine Energiemaschine (40) und eine Drehzahlausgleichseinrichtung (44) und einen ersten Leistungsausgang und ein magnetischelektrisches Umlaufgetriebe (42), wobei das Umlaufgetriebe (42) über eine Antriebswelle (46) mit der Energiemaschine (40) verbunden ist. Das Umlaufgetriebe (42) ist zur Einstellung und/oder Verstellung der Drehzahl des ersten Leistungsausgangs (32) und/oder der Drehzahlausgleichseinrichtung (44) angeordnet. Die Erfindung betrifft weiter eine Achse (100) und eine Arbeitsmaschine (10).

## Beschreibung

Die Erfindung betrifft eine Antriebsanordnung gemäss dem Oberbegriff des unabhängigen Anspruchs 1, eine Achse gemäss dem Oberbegriff des unabhängigen Anspruchs 14 und eine Arbeitsmaschine gemäss dem Oberbegriff des unabhängigen Anspruchs 15.

Arbeitsmaschinen, bevorzugt Baumaschinen oder landwirtschaftliche Arbeitsfahrzeuge, besondere bevorzugt landwirtschaftliche Zugfahrzeuge oder Ackerschlepper, werden üblicherweise durch Verbrennungsmotoren angetrieben. Der Verbrennungsmotor kann dabei eine oder mehrere Achsen der Arbeitsmaschine, insbesondere eine Hinterachse und/oder eine Vorderachse antreiben. Der Antrieb der Achse(n) erfolgt für gewöhnlich von der Kurbelwelle des Verbrennungsmotors über ein Getriebe mit veränderbarer Übersetzung und einem oder mehrere Fahrantrieben, insbesondere eines oder mehrere Differenzialgetriebe. Der Fahrantrieb, insbesondere das Differenzialgetriebe, kann abtriebsseitig mit den Wellen der Räder, insbesondere der Vorder- und/oder Hinterräder, in Antriebsverbindung stehen.

Ebenso kann der Verbrennungsmotor zusätzlich einen ersten Leistungsausgang, insbesondere einen mechanische Leistungsausgang, antreiben. Im Speziellen kann der Verbrennungsmotor eine Zapfwelleneinheit, insbesondere eine Zapfwelle, antreiben. Die Zapfwelleneinheit kann sich an einer Rückseite der Arbeitsmaschine befinden, insbesondere in der Nachbarschaft einer Anbauschnittstelle für Arbeitsgeräte.

Derzeit liegen Vorschläge vor, derartige Arbeitsmaschinen durch Elektromotoren anzutreiben, insbesondere als rein batteriegetriebene Fahrzeuge. Eine fachübliche, naheliegende Vorgehensweise würde den bisherigen (mit einer in Längsrichtung verlaufenden, nunmehr jedoch elektromotorisch angetriebenen Welle und einem Differenzialgetriebe aufgebauten) Antriebsstrang auf derartige Fahrzeuge übertragen, wie in der US 2023/0227106 A1 gezeigt. Die DE 10 2008 032 848 A1 zeigt eine Achse für eine Arbeitsfahrzeug, insbesondere ein Flurförderfahrzeug, mit einem Differenzialgetriebe, das abtriebsseitig mit den Wellen der Hinterräder in Antriebsverbindung steht. Der Antrieb des Differenzialgetriebes erfolgt durch einen Elektromotor über eine Hohlwelle, die eine der Wellen der Hinterräder koaxial umschließt. Die Hohlwelle wird ihrerseits über einen als Innenläufer aufgeführten Elektromotor angetrieben, der um die Hohlwelle herum angebracht ist. Eine ähnliche Anordnung für einen Achsantrieb eines Kraftfahrzeugs, jedoch mit einem Zahnradgetriebe zwischen dem Elektromotor und der Hohlwelle und einem Schaltgetriebe zwischen der Hohlwelle und dem Differenzialgetriebe, zeigt die DE 10 2020 114 063 A1.

Die Zapfwelle wird im Stand der Technik durch den Verbrennungsmotor angetrieben, wobei zur Drehzahleinstellung ein Überlagerungsgetriebe verwendet werden kann, das mit einem zusätzlichen Elektromotor gekoppelt ist (DE 10 2017 205 149 A1, EP 1 466 773 A2). Bei rein elektrischen Antrieben wurde vorgeschlagen, die Zapfwelle durch einen ersten Elektromotor anzutreiben, der durch ein Überlagerungsgetriebe mit dem Fahrantrieb verbunden ist, während das Überlagerungsgetriebe zudem durch einen weiteren Elektromotor angetrieben wird (DE 10 2019 106 294 A1).

Ausgehend von diesem Stand der Technik ist es eine Aufgabe der vorliegenden Erfindung eine gegenüber dem Stand der Technik verbesserte Antriebsanordnung, Achse und eine Arbeitsmaschine vorzuschlagen. Im Speziellen ist es eine Aufgabe der vorliegenden Erfindung eine Antriebsanordnung, eine Achse und eine Arbeitsmaschine vorzuschlagen, die konstruktiv einfacher und/oder kompakter ausgestaltet sind.

Diese Aufgabe wird durch eine Antriebsanordnung mit den Merkmalen des Anspruchs 1 und eine Achse mit den Merkmalen des Anspruchs 14 und eine Arbeitsmaschine mit den Merkmalen des Anspruchs 15 gelöst. Die abhängigen Ansprüche beziehen sich auf besonders vorteilhafte Ausführungsformen der Erfindung.

Erfindungsgemäss wird eine Antriebsanordnung für eine Arbeitsmaschine vorgeschlagen. Im Speziellen wird insbesondere eine Antriebsanordnung für eine Achse einer Arbeitsmaschine, bevorzugt eine elektrisch angetriebene Achse einer Arbeitsmaschine vorgeschlagen. Die Antriebsanordnung umfasst eine Energiemaschine und eine Drehzahlausgleichseinrichtung und einen ersten Leistungsausgang und ein magnetisch-elektrisches Umlaufgetriebe, insbesondere ein magnetisch-elektrisches Umlaufgetriebe mit integrierter elektrischer Maschine. Das Umlaufgetriebe ist über eine oder mit einer oder durch eine Antriebswelle mit der Energiemaschine verbunden. Das Umlaufgetriebe ist zur Einstellung und/oder Verstellung der Drehzahl und/oder des Drehmoments des ersten Leistungsausgangs und/oder der Drehzahlausgleichseinrichtung, insbesondere einer Antriebsseite der Drehzahlausgleichseinrichtung, angeordnet. Mit anderen Worten, alternativ oder zusätzlich kann mit dem Umlaufgetriebe die Drehzahl des ersten Leistungsausgangs und/oder der Drehzahlausgleichseinrichtung einstellbar und/oder verstellbar sein. Die Energiemaschine und das Umlaufgetriebe können quer in die Achse der Arbeitsmaschine eingebaut werden. Ausserdem können die Energiemaschine und das Umlaufgetriebe unabhängig voneinander betrieben werden.

Die Energiemaschine kann als ein Elektromotor ausgebildet sein. Alternativ kann die Energiemaschine als Brennstoffzelle ausgebildet sein. Die Energiemaschine kann aber auch eine mit Gleichstrom und/oder Drehstrom betriebene Synchron- und/oder Asynchronmaschine mit permanenter und/oder elektrischer Erregung, besonders bevorzugt eine permanenterregte Drehstrom-Synchronmaschine sein. Die Energiemaschine kann motorisch oder generatorisch betreibbar sein. Die Energiemaschine kann die Antriebsanordnung mit einer Kraft und/oder einer Drehzahl und/oder einem Drehmoment antreiben. Die Energiemaschine kann einen Abtrieb und/oder eine Abtriebswelle umfassen. Die Energiemaschine kann abtriebsseitig mit der Antriebswelle verbunden sein. Dazu kann beispielsweise ein Rotor der Energiemaschine, insbesondere ein innenliegender Rotor, mit der Antriebswelle verbunden sein. Die Energiemaschine kann als Drehmoment- oder Torquemotor ausgeführt sein. Die Energiemaschine treibt bei dieser Ausführungsform die Antriebswelle direkt an. Ebenso kann die Energiemaschine aber auch direkt oder über eine oder mit einer oder durch eine erste Übersetzungsstufe, insbesondere eine erste Stirnradstufe oder ein erstes Zahnradpaar oder einen ersten Planetensatz, oder ein erstes Getriebe mit der Antriebswelle verbunden sein. Die Energiemaschine kann also mit festem Übersetzungsverhältnis oder mit einem variablen Übersetzungsverhältnis, beispielsweise über das erste Getriebe mit der Antriebswelle verbunden sein. Die Energiemaschine kann auch als Generator ausgebildet sein, und insbesondere in einem Rekuperationsbetrieb einen Energiespeicher aufladen. Die Energiemaschine kann direkt oder indirekt mit der Drehzahlausgleichseinrichtung und/oder dem ersten Leistungsausgang verbunden sein. Im Speziellen kann die Energiemaschine die Antriebswelle und/oder die Drehzahlausgleichseinrichtung und/oder den ersten Leistungsausgang antreiben. Die Antriebsanordnung kann eine Leistungselektronik umfassen, um die elektrische Leistung zwischen der Energiemaschine, dem Energiespeicher und dem Umlaufgetriebe, insbesondere dem äusseren Rotor oder äusseren Stator, zu übertragen.

Die Antriebsanordnung, insbesondere die Achse oder die Arbeitsmaschine, kann den oder die Energiespeicher umfassen. Der oder die Energiespeicher kann mit der Energiemaschine und/oder dem Umlaufgetriebe, insbesondere einem äusseren Stator des Umlaufgetriebes, elektrisch verbunden und/oder elektrisch koppelbar sein. Der Energiespeicher kann ein elektrischer Energiespeicher sein. Der Energiespeicher kann die angeschlossene(n) Energiemaschine(n) mit Energie, insbesondere elektrischer Energie versorgen. Der Energiespeicher kann mit der Energiemaschine verbunden und/oder koppelbar sein, insbesondere elektrisch verbunden und/oder elektrisch koppelbar sein. Der Energiespeicher kann als eine Batterie und/oder ein Akku und/oder eine Superkondensator und/oder eine Brennstoffzelle und/oder eine sonstige Vorrichtung zur Speicherung von elektrischer Energie ausgebildet sein.

Unter verbunden kann bevorzugt mechanisch verbunden, besonders bevorzugt antreibbar verbunden, also drehmoment- und/oder drehzahlübertragend verbunden, und/oder gekoppelt oder koppelbar, also mechanisch gekoppelt und/oder starr gekoppelt oder mechanisch koppelbar verstanden werden. Unter mechanisch verbunden, bevorzugt unter antreibbar verbunden und/oder gekoppelt oder koppelbar bzw. mechanisch gekoppelt oder mechanisch koppelbar kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Die Drehzahlausgleichseinrichtung kann antriebsseitig antreibbar sein. Die Drehzahlausgleichseinrichtung kann an der und/oder mit der Antriebsseite antreibbar sein. Die Drehzahlausgleichseinrichtung kann abtriebsseitig mit Bodeneingriffsmitteln verbunden sein. Die Drehzahlausgleichseinrichtung kann abtriebsseitig zum Antrieb von Bodeneingriffsmitteln ausgebildet sein. Drehzahlausgleichseinrichtung kann an der und/oder mit der Abtriebsseite zum Antrieb von Bodeneingriffsmitteln ausgebildet sein. Die Drehzahlausgleichseinrichtung kann einen Eingang und zwei Ausgänge umfassen. Die beiden Ausgänge können in einem kinematischen Gleichgewicht sein. Der Eingang kann die Antriebsseite sein. Die beiden Ausgänge können die Abtriebsseite, insbesondere eine erste und zweite Abtriebsseite sein. Mit anderen Worten, die Drehzahlausgleichseinrichtung kann abtriebsseitig mindestens einen Achsabtrieb, bevorzugt zwei Achsabtriebe, zum Antrieb von Bodeneingriffsmitteln umfassen. Die Drehzahlausgleichseinrichtung, kann mindestens eine Achsabtriebswelle, bevorzugt zwei Achsabtriebswelle, besonders bevorzugt eine erste und eine zweite Achsabtriebswelle, zum Antrieb von Bodeneingriffsmitteln umfassen. Die Drehzahlausgleichseinrichtung kann abtriebsseitig mit der mindestens einen Achsabtriebswelle, bevorzugt den zwei Achsabtriebswellen, besonders bevorzugt der ersten und zweiten Achsabtriebswelle verbunden sein. Die Drehzahlausgleichseinrichtung kann ein Differenzialgetriebe sein. Im Speziellen kann die Drehzahlausgleichseinrichtung als ein Kegelraddifferential oder Planetendifferential, also insbesondere ein Planetengetriebe, bevorzugt mit Doppelplaneten, oder ein Kegelradgetriebe ausgebildet sein. Die Drehzahlausgleichseinrichtung kann ein Stirnraddifferential mit Käfig sein.

Der erste Leistungsausgang kann eine erste Ausgangswelle umfassen und/oder als erste Ausgangswelle ausgebildet sein. Ebenso kann der erste Leistungsausgang zusätzlich eine Zapfwelleneinheit umfassen. Die Zapfwelleneinheit kann ein Zapfwellengetriebe und/oder eine Zapfwelle umfassen. Die Zapfwelleneinheit, insbesondere das Zapfwellengetriebe, kann antriebsseitig mit der ersten Ausgangswelle verbunden sein. Ausserdem kann die Zapfwelleneinheit, insbesondere das Zapfwellengetriebe, abtriebsseitig mit der Zapfwelle verbindbar oder verbunden sein. Der erste Leistungsausgang kann sich in eine Längs- und Vorwärtsrichtung V der Antriebsanordnung und/oder Achse und/oder Arbeitsmaschine erstrecken. Alternativ kann die Antriebsanordnung zusätzlich ein Modul zur Drehrichtungsumkehr umfassen. Das Modul zur Drehrichtungsumkehr kann im Leistungsfluss nach dem Umlaufgetriebe angeordnet sein.

Die Antriebsanordnung oder die Arbeitsmaschine oder die Achse kann eine Steuereinheit umfassen. Die Steuereinheit kann mit der Energiemaschine signalverbunden und/oder wirkend gekoppelt und/oder signalübertragend und/oder datenleitend verbunden sein. Die Steuereinheit kann konfiguriert sein, eines oder mehrere Drehzahlsignale und/oder Drehmomentsignale von der Antriebsanordnung, insbesondere von Drehzahl- und/oder Drehmomentsensoren der Antriebsanordnung, und/oder der Energiemaschine zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die Drehzahl und/oder das Drehmoment der Antriebsanordnung, insbesondere der Energiemaschine, einzustellen und/oder zu verstellen, insbesondere eine vorgebbare Drehzahl und/oder ein vorgebbares Drehmoment einzustellen und/oder zu verstellen. Die Steuereinheit kann konfiguriert sein, die Drehzahl des ersten Leistungsausgangs und/oder der Drehzahlausgleichseinrichtung mit dem Umlaufgetriebe einzustellen und/oder zu verstellen sein.

Im Speziellen kann die Antriebsanordnung für die elektrisch angetriebene Achse und den ersten Leistungsausgang eines landwirtschaftlichen Arbeitsfahrzeugs ein Differenzialgetriebe, das abtriebsseitig mit der ersten und zweiten Achsabtriebswelle zum Antrieb der Bodeneingriffsmitteln und antriebsseitig mit einer Hohlwelle gekoppelt ist, die eine der Achsabtriebswelle zumindest teilweise umschließt, sowie die Energiemaschine mit einer koaxial oder parallel zur Hohlwelle ausgerichteten Rotationsachse umfassen. Zudem sind eine sich in Längs- und Vorwärtsrichtung erstreckende, als Nebenabtrieb dienender erster Leistungsausgang, und ein magnetisch-elektrisches Umlaufgetriebe vorgesehen, wobei die Energiemaschine mit der Hohlwelle und über das Winkelgetriebe mit dem ersten Leistungsausgang drehmomentübertragend verbunden ist und das Umlaufgetriebe zur Verstellung der Drehzahl des ersten Leistungsausgangs oder der Hohlwelle angeordnet ist.

Wesentlich für die Erfindung ist, dass das Umlaufgetriebe vorteilhafterweise zum Einstellen und/oder Verstellen der Drehzahl an der Antriebswelle und/oder der Drehzahlausgleichseinrichtung und/oder dem ersten Leistungsausgang angeordnet ist und/oder mit dem Umlaufgetriebe vorteilhafterweise eine Drehzahl an der Antriebswelle und/oder der Drehzahlausgleichseinrichtung und/oder dem ersten Leistungsausgang einstellbar und/oder verstellbar sein kann. Die Antriebswelle und/oder die Drehzahlausgleichseinrichtung und/oder der erste Leistungsausgang können dadurch ohne Zwischenschalten eines Getriebes mit veränderbarem Übersetzungsverhältnis durch die Energiemaschine antreibbar sein. Mit anderen Worten, das Umlaufgetriebe stellt eine Drehzahl an der Antriebswelle und/oder der Drehzahlausgleichseinrichtung und/oder dem erste Leistungsausgang ein und/oder verstellt die Drehzahl. Ausserdem kann auf eine konstruktiv aufwändige Umlenkung des Drehmoments wie bei einer in Längsrichtung eingebauten Antriebsanordnung verzichtet werden, da die Antriebsanordnung quer zur Längsachse der Arbeitsmaschine bzw. entlang einer Achse angeordnet werden kann. Vorteilhafterweise kann dadurch ein konstruktiv einfacher und kompakter Aufbau der Antriebsanordnung realisiert werden.

In Ausgestaltung der Erfindung ist das Umlaufgetriebe in den Kraftfluss zwischen der Energiemaschine und dem ersten Leistungsausgang eingefügt. Dabei kann der Kraftfluss von der Energiemaschine zum ersten Leistungsausgang ausgebildet sein. Mit anderen Worten, das Umlaufgetriebe kann im Kraftfluss zwischen der Energiemaschine und dem ersten Leistungsausgang angeordnet sein. Die Energiemaschine kann abtriebsseitig, insbesondere direkt, mit der Drehzahlausgleichseinrichtung und dem Umlaufgetriebe verbunden sein. Die Energiemaschine kann über die oder mit der oder durch die Antriebswelle mit der Drehzahlausgleichseinrichtung und dem Umlaufgetriebe verbunden sein. Im Speziellen kann die Antriebswelle über eine oder mit einer oder durch eine zweite Übersetzungsstufe, insbesondere eine zweite Stirnradstufe oder ein zweites Zahnradpaar oder einen zweiten Planetensatz, oder ein zweites Getriebe mit der Drehzahlausgleichseinrichtung verbunden sein. Alternativ oder zusätzlich kann die Antriebswelle über eine oder mit einer oder durch eine dritte Übersetzungsstufe, insbesondere eine dritte Stirnradstufe oder ein drittes Zahnradpaar oder einen dritten Planetensatz, oder ein drittes Getriebe mit dem Umlaufgetriebe verbunden sein. Das Umlaufgetriebe kann abtriebsseitig, insbesondere direkt, mit dem ersten Leistungsausgang verbunden sein, insbesondere der ersten Ausgangswelle verbunden sein. Das Umlaufgetriebe kann über eine oder mit einer oder durch eine vierte Übersetzungsstufe, insbesondere eine vierte Stirnradstufe oder ein viertes Zahnradpaar oder einen vierten Planetensatz, oder ein viertes Getriebe mit dem ersten Leistungsausgang, insbesondere der ersten Ausgangswelle verbunden sein.

In Ausgestaltung der Erfindung ist das Umlaufgetriebe in den Kraftfluss zwischen der Energiemaschine und der Drehzahlausgleichseinrichtung eingefügt. Dabei kann der Kraftfluss von der Energiemaschine zur Drehzahlausgleichseinrichtung ausgebildet sein. Mit anderen Worten, das Umlaufgetriebe kann im Kraftfluss zwischen der Energiemaschine und der Drehzahlausgleichseinrichtung angeordnet sein. Die Energiemaschine kann abtriebsseitig, insbesondere direkt, mit dem erste Leistungsausgang und dem Umlaufgetriebe verbunden sein. Die Energiemaschine kann über die oder mit der oder durch die Antriebswelle mit dem ersten Leistungsausgang und dem Umlaufgetriebe verbunden sein. Im Speziellen kann die Antriebswelle über eine oder mit einer oder durch eine zweite Übersetzungsstufe, insbesondere eine zweite Stirnradstufe oder ein zweites Zahnradpaar oder einen zweiten Planetensatz, oder ein zweites Getriebe mit dem erste Leistungsausgang verbunden sein. Zusätzlich kann die Antriebswelle über eine oder mit einer oder durch eine dritte Übersetzungsstufe, insbesondere eine dritte Stirnradstufe oder ein drittes Zahnradpaar oder einen dritten Planetensatz, oder ein drittes Getriebe mit dem Umlaufgetriebe verbunden sein. Das Umlaufgetriebe kann abtriebsseitig, insbesondere direkt, mit der Drehzahlausgleichseinrichtung verbunden sein, insbesondere der Antriebsseite der Drehzahlausgleichseinrichtung verbunden sein. Das Umlaufgetriebe kann über eine oder mit einer oder durch eine vierte Übersetzungsstufe, insbesondere eine vierte Stirnradstufe oder ein viertes Zahnradpaar oder einen vierten Planetensatz, oder ein viertes Getriebe mit der Drehzahlausgleichseinrichtung, insbesondere der Antriebsseite der Drehzahlausgleichseinrichtung verbunden sein.

In Ausgestaltung der Erfindung ist die Drehzahlausgleichseinrichtung, insbesondere das Differenzialgetriebe, abtriebsseitig mit einer ersten und zweiten Achsabtriebswelle zum Antrieb von Bodeneingriffsmitteln verbunden. Die Drehzahlausgleichseinrichtung kann antriebsseitig mit der Antriebswelle verbunden sein.

In Ausgestaltung der Erfindung ist die Antriebswelle als eine Hohlwelle ausgebildet. Die Hohlwelle kann einen oder mehrere Achsabtriebe oder eine oder mehrere Achsabtriebswellen umschliessen. Im Speziellen kann Hohlwelle mindestens eine der ersten und zweiten Achsabtriebswellen zumindest teilweise oder vollständig umschliessen. Einer oder mehrere Achsabtriebe oder eine oder mehrere der Achsabtriebswellen können teilweise oder vollständig in der Hohlwelle angeordnet sein. Dadurch kann vorteilhafterweise eine kompakte konstruktive Ausgestaltung der Antriebsanordnung, insbesondere der Achse, erreicht werden.

In Ausgestaltung der Erfindung weist die Energiemaschine eine koaxial und/oder parallel zur Antriebswelle oder Hohlwelle ausgerichtete Rotationsachse auf. Rotationsachse kann auch koaxial und/oder parallel zur Antriebsseite der Drehzahlausgleichseinrichtung ausgerichtet sein. Ebenso können die Energiemaschine, insbesondere die Rotationsachse, und das Umlaufgetriebe, insbesondere eine Rotationsachse des Umlaufgetriebes, koaxial und/oder parallel zueinander angeordnet sein.

In Ausgestaltung der Erfindung ist die Energiemaschine oder das Umlaufgetriebe über ein oder mit einem oder durch ein Winkelgetriebe mit dem ersten Leistungsausgang verbunden. Das Winkelgetriebe kann beispielsweise ein Kegelradgetriebe sein. Das Winkelradgetriebe kann winklig zueinanderstehende An- und Abtriebswellen umfassen, deren Achsen einen gemeinsamen Schnittpunkt besitzen. Die Drehmoment- bzw. Kraftübertragung kann beispielsweise mit Kegelrädern erfolgen. Das Winkelgetriebe kann ein erstes und ein zweites Kegel-Zahnrad umfassen. Das zweite Zahnrad kann mit der ersten Ausgangswelle verbunden sein. Im Speziellen kann das erste Kegel-Zahnrad als ein Ritzel oder Kegelritzel ausgebildet sein. Das zweite Kegel-Zahnrad kann als ein Kegelrad oder Tellerrad ausgebildet sein. Die Drehachsen des ersten und zweiten Kegel-Zahnrads können insbesondere in einem 90 Grad Winkel zueinander angeordnet sind. Die Energiemaschine kann abtriebsseitig, insbesondere direkt, mit dem Winkelgetriebe und das Winkelgetriebe mit dem ersten Leistungsausgang verbunden sein. Die Energiemaschine kann über die oder mit der oder durch die Antriebswelle mit dem Winkelgetriebe, insbesondere dem ersten Kegel-Zahnrad, und das Winkelgetriebe, insbesondere das zweite Kegel-Zahnrad, mit dem ersten Leistungsausgang, insbesondere der ersten Ausgangswelle, verbunden sein. Im Speziellen kann die Antriebswelle über eine oder mit einer oder durch eine zweite Übersetzungsstufe, insbesondere eine zweite Stirnradstufe oder ein zweites Zahnradpaar oder einen zweiten Planetensatz, oder ein zweites Getriebe mit dem Winkelgetriebe, insbesondere dem ersten Kegel-Zahnrad, und das Winkelgetriebe, insbesondere das zweite Kegel-Zahnrad, mit dem ersten Leistungsausgang verbunden sein, insbesondere der ersten Ausgangswelle. Ebenso kann das Umlaufgetriebe kann abtriebsseitig, insbesondere direkt, mit dem Winkelgetriebe, insbesondere dem ersten Kegel-Zahnrad, und das Winkelgetriebe, insbesondere das zweite Kegel-Zahnrad, mit dem ersten Leistungsausgang, insbesondere der ersten Ausgangswelle, verbunden sein. Im Speziellen kann das Umlaufgetriebe über eine oder mit einer oder durch eine vierte Übersetzungsstufe, insbesondere eine vierte Stirnradstufe oder ein viertes Zahnradpaar oder einen vierten Planetensatz, oder ein viertes Getriebe mit dem Winkelgetriebe, insbesondere dem ersten Kegel-Zahnrad, und das Winkelgetriebe, insbesondere das zweite Kegel-Zahnrad, mit dem ersten Leistungsausgang, insbesondere der ersten Ausgangswelle, verbunden sein. Auf diese Weise erhält man einen kompakten Aufbau der Antriebsanordnung und benötigt das Winkelgetriebe nur für den Antrieb des ersten Leistungsausgangs, nicht aber für den Antrieb der Bodeneingriffsmittel.

In Ausgestaltung der Erfindung weist das Umlaufgetriebe einen inneren Rotor, einen äusseren Rotor, insbesondere einen inneren Stator, und dazwischen einen magnetischen Modulationsring auf. Der innere Rotor kann ein Rad, insbesondere ein inneres Rad, oder ein Ring, insbesondere ein innerer Ring sein. Der äussere Rotor, auch Aussenrotor genannt, bevorzugt der äussere Stator, kann ein Rad, insbesondere ein äusseres Rad, oder ein Ring, insbesondere ein äusserer Ring sein. Der innere Rotor und/oder äussere Rotor können Permanentmagnete umfassen, insbesondere eines oder mehrere Magnetpolpaare umfassen. Das Magnetpolpaar kann zwei nebeneinander angeordnete Magnete, beispielsweise Permanentmagnete oder Bogensegmentmagneten umfassen. Die Magnete des Magnetpolpaares können eine alternierende Polarisierung aufweisen, insbesondere eine alternierende und radiale Polarisierung aufweisen. Der innere Rotor und der äussere Rotor können eine voneinander verschiedene Anzahl an Permanentmagneten oder Magnetpolpaare umfassen. Im Speziellen kann der äussere Rotor eine grössere Anzahl Permanentmagneten oder Magnetpolpaare umfassen als der innere Rotor. Alternativ kann der äussere Rotor als äusserer Stator mit Spulen ausgebildet sein. Mit anderen Worten, der äussere Stator kann zur Erzeugung eines Magnetfelds ausgebildet sein. Der äussere Stator kann Wicklungen zur Erzeugung des Magnetfelds umfassen. Legt man Wechselstrom an diese Spulen oder Wicklungen an, so entsteht dadurch ein rotierendes elektromagnetisches Feld. Im Speziellen kann die Steuereinheit konfiguriert sein, den äusseren Rotor oder den äusseren Stator einzustellen und/oder zu verstellen, um die Drehzahl des ersten Leistungsausgangs und/oder der Drehzahlausgleichseinrichtung einzustellen und/oder zu verstellen. Die Funktionsweise ähnelt der Funktionsweise bürstenloser Motoren mit Permanentmagneten. Das elektromagnetische Feld ist in seiner Funktion dem äußeren Stator mit Permanentmagneten gleichwertig. Durch die Realisierung als äusserer Stator mit Spulen entfällt hierbei ein drehendes Teil (der äussere Rotor mit Permanentmagneten bzw. der Aussenrotor), was die Lagerung der gesamten Umlaufgetriebestufe vereinfacht. Zwischen dem inneren Rotor und dem äußeren Rotor oder Stator ist der magnetische Modulationsring angeordnet, insbesondere der rotierbare magnetischen Modulationsring angeordnet. Der Modulationsring kann ein Rad oder einen Ring umfassen. Der Modulationsring kann Permanentmagnete umfassen. Ebenso kann der Modulationsring modulierenden ferromagnetische Segmente oder eines oder mehrere Segmentpaare umfassen. Die Segmentpaare können alternierend ferromagnetisch und paramagnetisch sein. Der Modulationsring kann den magnetischen Fluss zwischen dem äusseren Rotor und dem inneren Rotor oder dem äusseren Stator und dem inneren Rotor modulieren. Im Speziellen kann das Umlaufgetriebe den inneren Rotor mit einer ersten Anzahl magnetischer Polpaare, den äusseren Stator mit einer zweiten Anzahl elektrischer Polpaare und den Modulationsring mit einer dritten Anzahl ferromagnetischer Segmente umfassen. Der Modulationsring kann das elektromagnetische Feld zwischen innerem Rotor und Stator modulieren.

In Ausgestaltung der Erfindung ist der innere Rotor als eine Antriebsseite des Umlaufgetriebes, also bevorzugt als Eingang des Umlaufgetriebes, besonders bevorzugt mit Antriebselement, und der Modulationsring als eine Abtriebsseite des Umlaufgetriebes, bevorzugt als Ausgang des Umlaufgetriebes, besonders bevorzugt mit Abtriebselement, ausgebildet. Die Energiemaschine kann abtriebsseitig, insbesondere direkt, mit dem inneren Rotor verbunden sein. Die Energiemaschine kann über die oder mit der oder durch die Antriebswelle mit dem inneren Rotor verbunden sein. Im Speziellen kann die Antriebswelle über eine oder mit einer oder durch eine dritte Übersetzungsstufe, insbesondere eine dritte Stirnradstufe oder ein drittes Zahnradpaar oder einen dritten Planetensatz, oder ein drittes Getriebe mit dem inneren Rotor verbunden sein. Der erste Leistungsausgang oder die Drehzahlausgleichseinrichtung können antriebsseitig mit dem Modulationsring verbunden sein. Der Modulationsring kann, insbesondere abtriebsseitig und/oder direkt, mit dem ersten Leistungsausgang verbunden sein, insbesondere der ersten Ausgangswelle verbunden sein. Der Modulationsring kann über die oder mit der oder durch die vierte Übersetzungsstufe, insbesondere die vierte Stirnradstufe oder das vierte Zahnradpaar oder den vierten Planetensatz, oder das vierte Getriebe mit dem ersten Leistungsausgang, insbesondere der ersten Ausgangswelle verbunden sein. Ebenso kann der Modulationsring, insbesondere abtriebsseitig und/oder direkt, mit dem Winkelgetriebe, insbesondere dem ersten Kegel-Zahnrad, und das Winkelgetriebe, insbesondere das zweite Kegel-Zahnrad, mit dem ersten Leistungsausgang, insbesondere der ersten Ausgangswelle, verbunden sein. Im Speziellen kann der Modulationsring über die oder mit der oder durch die vierte Übersetzungsstufe, insbesondere die vierte Stirnradstufe oder das vierte Zahnradpaar oder den vierten Planetensatz, oder das vierte Getriebe mit dem Winkelgetriebe, insbesondere dem ersten Kegel-Zahnrad, und das Winkelgetriebe, insbesondere das zweite Kegel-Zahnrad, mit dem ersten Leistungsausgang, insbesondere der ersten Ausgangswelle, verbunden sein. Vorteilhafterweise kann die Steuereinheit konfiguriert sein, den äusseren Rotor oder den äusseren Stator einzustellen und/oder zu verstellen, um die Drehzahl des ersten Leistungsausgangs einzustellen und/oder zu verstellen. Alternativ kann der Modulationsring, insbesondere abtriebsseitig und/oder direkt, mit der Drehzahlausgleichseinrichtung verbunden sein, insbesondere der Antriebsseite der Drehzahlausgleichseinrichtung verbunden sein. Der Modulationsring kann über die oder mit der oder durch die vierte Übersetzungsstufe, insbesondere die vierte Stirnradstufe oder das vierte Zahnradpaar oder den vierten Planetensatz, oder das vierte Getriebe mit der Drehzahlausgleichseinrichtung, insbesondere der Antriebsseite der Drehzahlausgleichseinrichtung verbunden sein. Vorteilhafterweise kann die Steuereinheit konfiguriert sein, den äusseren Rotor oder den äusseren Stator einzustellen und/oder zu verstellen, um die Drehzahl des ersten Leistungsausgangs und/oder der Drehzahlausgleichseinrichtung einzustellen und/oder zu verstellen.

Zu Einzelheiten des Aufbaus und der Funktion des magnetisch-elektrischen Umlaufgetriebes sei auf die DE 10 2020 119 984 A1 und M. Lang, Konzeption und Analyse einer magnetisch-elektrisch leistungsverzweigten Umlaufgetriebestufe zum Einsatz in einem landwirtschaftlichen Fahrzeug, Dissertation, Berlin 2020 und die dort zitierten Dokumente verwiesen, deren sämtlichen Offenbarungen vollumfänglich durch Verweis mit in die vorliegenden Unterlagen aufgenommen werden.

In Ausgestaltung der Erfindung werde die Energiemaschine und/oder der Stator durch eine Steuereinheit derart elektrisch beaufschlagt, dass der erste Leistungsausgang und die Antriebswelle mit einer vorgebbaren Drehzahl rotieren. Mit anderen Worten, die Steuereinheit kann konfiguriert sein, die Energiemaschine und/oder den Stator elektrisch zu beaufschlagen, sodass der erste Leistungsausgang und die Antriebswelle mit einer vorgebbaren Drehzahl rotieren. Die Steuereinheit kann konfiguriert sein, die Energiemaschine und/oder den Energiespeicher einzustellen und/oder zu verstellen, sodass die von der Energiemaschine generierte und/oder die im Energiespeichers gespeicherte elektrische Energie bzw. Leistung an den Stator, insbesondere dessen Wicklungen, abgeben wird. Mit anderen Worten, die Energiemaschine und/oder der Energiespeicher können mit der Steuereinheit derart einstellbar und/oder zu verstellbar sein, dass diese die von der Energiemaschine generierte und/oder die im Energiespeichers gespeicherte elektrische Energie bzw. Leistung an den Stator, insbesondere dessen Wicklungen, abgeben wird. Es kann also eine Drehzahl und/oder ein Drehmoment der Energiemaschine und/oder des Umlaufgetriebe einstellbar und/oder verstellbar sein, sodass der erste Leistungsausgang und die Antriebswelle mit einer vorgebbaren Drehzahl rotieren.

Die Erfindung betrifft weiter eine Achse, insbesondere eine elektrisch angetriebene Achse, für eine Arbeitsmaschine, umfassend eine Antriebsanordnung, insbesondere eine Antriebsanordnung nach einem der Ansprüche 1 bis 13. Die Antriebsanordnung kann an der Achse angeordnet oder in die Achse integriert sein.

Die Erfindung betrifft weiter eine Arbeitsmaschine, umfassend eine Achse, insbesondere eine Achse nach Anspruch 14, oder eine Antriebsanordnung, insbesondere eine Antriebsanordnung nach einem der Ansprüche 1 bis 13. Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile der Antriebsanordnung auf.

Die Arbeitsmaschine umfasst die Antriebsanordnung. Die Antriebsanordnung ist zum Antreiben der Arbeitsmaschine ausgebildet. Die Arbeitsmaschine kann eine, zwei oder mehrere Achse(n) umfassen. Im Speziellen kann die Arbeitsmaschine eine erste und eine zweite Fahrzeugachse umfassen. Die Achse(n), insbesondere die erste und/oder zweite Fahrzeugachse kann die Antriebsanordnung umfassen. Im Speziellen kann die Antriebsanordnung in die Achse, insbesondere in die erste und/oder zweite Fahrzeugachse integriert sein. Die Arbeitsmaschine kann mit einer Drehzahl und/oder Kraft und/oder einem Drehmoment der Energiemaschine antreibbar sein. Die erste Fahrzeugachse kann dabei eine Vorderachse, insbesondere eine lenkbare Vorderachse, und/oder die zweite Fahrzeugachse eine Hinterachse sein.

Die Steuereinheit kann zur Steuerung und/oder Regelung, insbesondere zum Einstellen und/oder Verstellen, der Arbeitsmaschine, insbesondere der Energiemaschine eingerichtet sein. Die Arbeitsmaschine kann eine Ein- und Ausgabeeinheit umfassen. Die Steuereinheit kann mit der Ein- und Ausgabeeinheit signalverbunden und/oder wirkend gekoppelt und/oder signalübertragend und/oder datenleitend verbunden sein, und/oder mit der Ein- und Ausgabeeinheit ansteuerbar und/oder einstellbar und/oder verstellbar sein. Die Ein- und Ausgabeeinheit kann in die Steuereinheit oder umgekehrt integriert sein. Der Bediener der Arbeitsmaschine kann mit der oder durch die Ein- und Ausgabeeinheit beispielsweise eine Geschwindigkeit der Arbeitsmaschine einstellen und/oder verstellen.

Die Arbeitsmaschine kann ausserdem eines oder mehrere Hilfsaggregate umfassen, beispielsweise eine Pumpe und/oder einen Kühler etc.. Die Hilfsaggregate können ein Bestandteil der Hydraulik des Antriebsanordnung sein. Die Arbeitsmaschine kann den ersten Leistungsausgang, insbesondere die Zapfwelleneinheit umfassen. Die Steuereinheit kann konfiguriert sein, die Antriebsanordnung und/oder die Achse und/oder Arbeitsmaschine mit einem Fahrsignal einzustellen und/oder zu verstellen und/oder anzusteuern und mit dem oder basierend auf dem Fahrsignal eine Geschwindigkeit der Arbeitsmaschine einzustellen und/oder zu verstellen, insbesondere zu erhöhen oder zu verringern. Die Arbeitsmaschine kann das oder die Bodeneingriffsmittel umfassen. Die Bodeneingriffsmittel können die Arbeitsmaschine auf dem Boden abstützen und/oder tragen. Ein Zugfahrzeugrahmen der Arbeitsmaschine kann sich auf die Bodeneingriffsmittel abstützen. Die Bodeneingriffsmittel können Räder oder Raupen oder Ketten sein. Die Bodeneingriffsmittel können insbesondere Vorderräder und Hinterräder sein. Die Arbeitsmaschine kann einen Geschwindigkeitssensor, beispielsweise einen Drehzahlsensor, zur Erfassung einer Geschwindigkeit der Arbeitsmaschine umfassen. Im Speziellen kann die Steuereinheit konfiguriert sein, eine Kraft und/oder ein Drehmoment und/oder eine Drehzahl der Energiemaschine einzustellen und/oder zu verstellen und/oder anzusteuern.

Die Antriebsanordnung oder die Achse oder die Arbeitsmaschine kann die Leistungselektronik umfassen. Die Leistungselektronik und/oder der Energiespeicher kann/können in der Steuereinheit integriert sein oder als externe Einheit(en) von der Steuereinheit ansteuerbar sein. Die Leistungselektronik kann ein elektronisches Steuergerät und/oder einen Inverter und/oder einen Spannungswandler umfassen. Im Betrieb kann der Inverter die Spannung des Energiespeichers in eine Spannung oder Energie oder Leistung umwandeln, welche die Energiemaschine und/oder der Stator benötigen. Zum Aufladen des Energiespeichers kann dieser Vorgang umgekehrt werden. Die Steuereinheit kann eine Recheneinheit, einen Computer, einen Prozessor, einen Speicher und/oder alle Software, Hardware, Algorithmen, Anschlüsse, insbesondere auch Sensoren, umfassen, die für die Einstellung und/oder Verstellung der Energiemaschine und/oder des äusseren Rotors oder Stators der Umlaufgetriebestufe und somit auch für die Einstellung und/oder Verstellung des Modulationsringes erforderlich sind. Der Energiespeicher kann von einer geeigneten Steuerelektronik ansteuerbar sein, um elektrische Energie und/oder Leistung zu speichern und/oder an den Stator abzugeben. Die Steuereinheit und/oder die Energiemaschine und/oder die Umlaufgetriebestufe, insbesondere der äussere Stator, können mit der Leistungselektronik und/oder dem Energiespeicher elektrisch verbunden und/oder elektrisch koppelbar sein.

Die Energiemaschine und/oder die Leistungselektronik und/oder der Energiespeicher und/oder der erste Leistungsausgang, insbesondere die Zapfwelleneinheit, können mit der Steuereinheit betreibbar, bevorzugt steuerbar und/oder regelbar, besonders bevorzugt ansteuerbar und/oder einstellbar und/oder verstellbar sein. Die Steuereinheit kann Signale zur Steuerung des Betriebs der Antriebsanordnung und/oder der Achse und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS-Standard oder CAN-Standard entspricht. Die Steuereinheit kann als ein elektronisches Modul, ein eingebettetes System, eine Recheneinheit, ein Computer, als ein Modul zum Steuern und/oder Regeln der Antriebsanordnung und/oder der Achse und/oder der Arbeitsmaschine ausgebildet sein. Die Steuereinheit kann einen oder mehrere Prozessoren und Speicher und/oder alle Software, Hardware, Algorithmen, Anschlüsse, insbesondere auch Sensoren, umfassen, die für die Steuerung und/oder Regelung der Antriebsanordnung und/oder der Achse und/oder der Arbeitsmaschine erforderlich sind. Verfahren können als Programm oder Algorithmus ausgebildet sein, welches auf und/oder mit der Steuereinheit ausführbar sind. Die Steuereinheit kann jedes Gerät umfassen, das Daten von verschiedenen Sensoren analysiert, Daten vergleichen und die erforderlichen Entscheidungen treffen, um den Betrieb der Antriebsanordnung und/oder der Achse und/oder der Arbeitsmaschine und die erforderlichen Aufgaben zur Steuerung und/oder Regelung des Betriebs der Antriebsanordnung und/oder der Achse und/oder der Arbeitsmaschine, zu steuern und/oder zu regeln und/oder auszuführen. Die Steuereinheit kann mit den Bauteilen der Antriebsanordnung und/oder der Achse und/oder der Arbeitsmaschine, also insbesondere der Energiemaschine und/oder der Leistungselektronik und/oder dem Energiespeicher und/oder den Sensoren, beispielsweise einem oder mehreren Geschwindigkeitssensor und/oder Drehzahl- und/oder Drehmomentsensor(en) signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsanordnung und/oder der Achse und/oder der Arbeitsmaschine kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnlichem erfolgen. Die Steuereinheit kann unmittelbar mit der an oder in der Arbeitsmaschine angeordneten Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen Arbeitsmaschine, insbesondere eines landwirtschaftlichen Zugfahrzeugs in Form eines Ackerschleppers, und
- Fig. 2: eine schematische Darstellung des ersten Ausführungsbeispiels der erfindungsgemässen Antriebsanordnung, und
- Fig. 3: eine schematische Darstellung eines zweiten Ausführungsbeispiels der erfindungsgemässen Antriebsanordnung, und
- Fig. 4: eine schematische Darstellung eines dritten Ausführungsbeispiels der erfindungsgemässen Antriebsanordnung, und
- Fig. 5: eine schematische Darstellung eines vierten Ausführungsbeispiels der erfindungsgemässen Antriebsanordnung.
- Fig. 6: eine schematische Darstellung eines fünften Ausführungsbeispiels der erfindungsgemässen Antriebsanordnung.
- Fig. 7: eine schematische Darstellung eines sechsten Ausführungsbeispiels der erfindungsgemässen Antriebsanordnung.
- Fig. 8: eine schematische Darstellung eines sechsten Ausführungsbeispiels der erfindungsgemässen Antriebsanordnung.

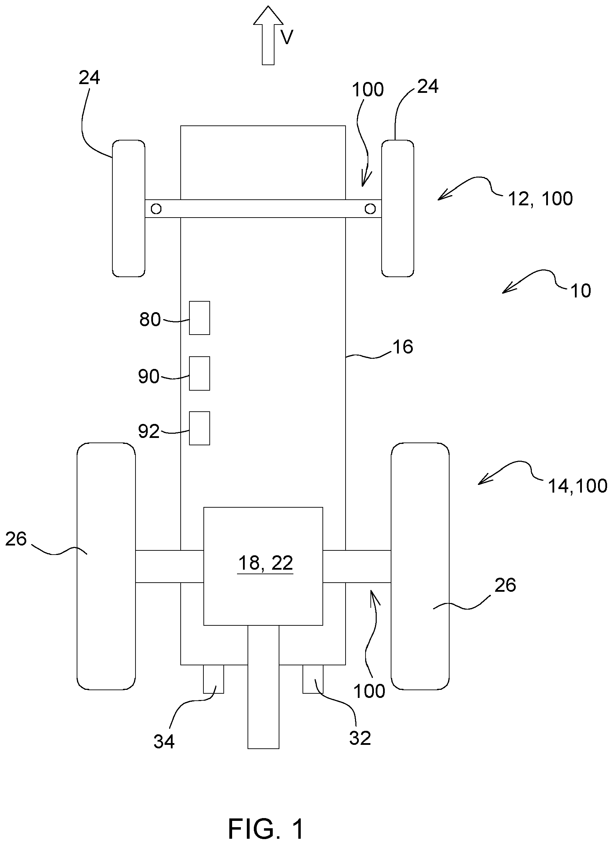

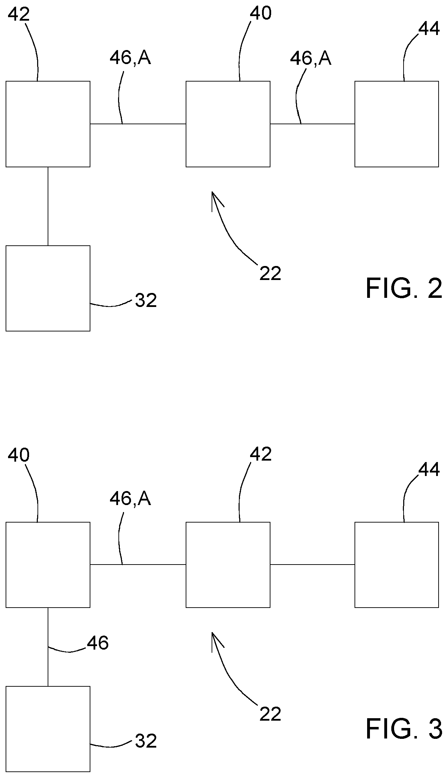

Figur 1 zeigt eine schematische Darstellung eines ersten Ausführungsbeispiels einer Arbeitsmaschine 10, insbesondere eines landwirtschaftlichen Zugfahrzeugs, das in Form eines Ackerschleppers (Traktors) ausgeführt ist. Die in einer Vorwärtsrichtung V, beispielsweise über ein Feld, bewegbar Arbeitsmaschine 10 umfasst ein tragendes Gestell 16, das sich durch zwei Achsen auf dem Erdboden abstützt. Die zwei Achsen sind als eine erste Fahrzeugachse 12, hier eine lenkbare Vorderachse, mit Bodeneingriffsmitteln 24 ausgebildet, und eine zweite Fahrzeugachse 14, hier als antreibbare Hinterachse mit Bodeneingriffsmitteln 26 ausgebildet. Die Arbeitsmaschine 10 umfasst eine Antriebsanordnung 22. Die Arbeitsmaschine 10 wird in der dargestellten Ausführungsform rein elektrisch angetrieben. Dazu kann die Arbeitsmaschine 10, insbesondere die Antriebsanordnung 22, einen Energiespeicher 18, hier beispielsweise eine Batterie (Akkumulator), umfassen, der elektrisch mit einer Energiemaschine 40 (siehe Figuren 2 bis 8) der Antriebsanordnung 22 verbunden ist. Die Antriebsanordnung 22 ist zum mechanischen Antrieb der Achsen 100, hier der zweiten Fahrzeugachse 14, insbesondere einer Drehzahlausgleichseinrichtung 44 (siehe Figuren 2 bis 7) und/oder eines ersten Leistungsausgangs 32 ausgebildet. Der erste Leistungsausgang 32 kann als Zapfwelleneinheit ausgebildet sein. Der erste Leistungsausgang 32 kann zum Antreiben eines Arbeitsgeräts (nicht gezeigt) vorgesehen sein, das über eine Schnittstelle 34 (z.B. Dreipunktschnittstelle) an der Arbeitsmaschine 10 anbringbar ist. Im Speziellen kann die Achse 100, vorliegend die zweite Fahrzeugachse 14, die Antriebsanordnung 22 umfassen oder die die Antriebsanordnung 22 an dieser angeordnet sein. Es kann aber auch jede Achse 100, insbesondere die erste und/oder zweite Fahrzeugachse 12, 14 jeweils eine Antriebsanordnung 22 umfassen. Die Arbeitsmaschine 10, insbesondere alternativ aber auch die Achse 100 oder die Antriebsanordnung 22, kann eine Steuereinheit 80 und/oder eine Ein- und Ausgabeeinheit 90 umfassen. Die Steuereinheit 80 ist mit der Energiemaschine 40 signalverbunden und/oder wirkend gekoppelt und/oder signalübertragend und/oder datenleitend verbunden. Die Steuereinheit 80 ist konfiguriert, die Drehzahl und/oder das Drehmoment der Antriebsanordnung 22, insbesondere der Energiemaschine 40 und/oder des Umlaufgetriebes 42, einzustellen und/oder zu verstellen. Die Steuereinheit 80 kann konfiguriert sein, eine vorgebbare Drehzahl und/oder ein vorgebbares Drehmoment der Antriebsanordnung 22, insbesondere der Energiemaschine 40 und/oder des Umlaufgetriebes 42, einzustellen und/oder zu verstellen. Die Steuereinheit 80 kann aber auch mit dem Energiespeicher 18 und/oder einer Leistungselektronik 92 der Antriebsanordnung 22, insbesondere alternativ der Achse 100 oder der Arbeitsmaschine 10, und/oder Sensoren der Antriebsanordnung, insbesondere alternativ der Achse oder der Arbeitsmaschine, signalverbunden und/oder wirkend gekoppelt und/oder signalübertragend und/oder datenleitend verbunden sein. Die Steuereinheit 80 kann konfiguriert sein, das Umlaufgetriebe 42, insbesondere einen äusseren Rotor oder den äusseren Stator 62, einzustellen und/oder zu verstellen, um die Drehzahl des ersten Leistungsausgangs 32 und/oder der Drehzahlausgleichseinrichtung einzustellen und/oder zu verstellen.

Der Energiespeicher 18 versorgt die elektrisch angetriebenen Elemente der Antriebsanordnung 22, insbesondere die Energiemaschine 40, mit Strömen bzw. Spannungen geeigneter Frequenz und Amplituden, um gewünschte Ausgangsdrehzahlen oder -Drehmomente für den ersten Leistungsausgang 32 und/oder die Drehzahlausgleichseinrichtung 44 (siehe Fig. 2 bis 8), und somit die zweite Fahrzeugachse 14, bereitzustellen.

Figur 2 zeigt eine schematische Darstellung des ersten Ausführungsbeispiels der erfindungsgemässen Antriebsanordnung 22. Die in Figur 2 gezeigte Antriebsanordnung 22 entspricht im Wesentlichen der in Figur 1 Antriebsanordnung 22, sodass im Folgenden lediglich auf Details und/oder Unterschiede eingegangen wird. Die in Figur 1 dargestellte Arbeitsmaschine 10 kann die in Figur 2 dargestellte Antriebsanordnung 22 umfassen.

Die Antriebsanordnung 22 umfasst die Energiemaschine 40, eine Drehzahlausgleichseinrichtung 44, den ersten Leistungsausgang 32 und ein magnetisch-elektrisches Umlaufgetriebe 42. Das Umlaufgetriebe 42 ist über eine oder mit einer oder durch eine Antriebswelle 46 mit der Energiemaschine 40 verbunden, also insbesondere drehmoment- und/oder drehzahlübertragend verbunden sowie mechanisch und starr gekoppelt.

Das Umlaufgetriebe 42 ist zur Einstellung und/oder Verstellung der Drehzahl des ersten Leistungsausgangs 32 und/oder der Drehzahlausgleichseinrichtung 44, vorliegend nur des ersten Leistungsausgangs 32, angeordnet. Das Umlaufgetriebe 42 ist in den Kraftfluss zwischen der Energiemaschine 40 und dem ersten Leistungsausgang 32 eingefügt. Mit anderen Worten, die Steuereinheit kann konfiguriert, das Umlaufgetriebe 42, insbesondere den äusseren Rotor oder den äusseren Stator, einzustellen und/oder zu verstellen, um die Drehzahl des ersten Leistungsausgangs 32 einzustellen und/oder zu verstellen.

Die Energiemaschine 40 kann die Antriebsanordnung 22 mit einer Kraft und/oder einer Drehzahl und/oder einem Drehmoment antreiben. Die Energiemaschine 40 ist abtriebsseitig mit der Antriebswelle 46 verbunden sein. Die Energiemaschine 40 ist direkt, insbesondere mit der Antriebswelle 46, mit der Drehzahlausgleichseinrichtung verbunden. Die Energiemaschine 40 ist indirekt über das Umlaufgetriebe 42 mit dem ersten Leistungsausgang 32 verbunden. Im Speziellen treibt die Energiemaschine 40 die Antriebswelle 46, und somit die Drehzahlausgleichseinrichtung 44 und das Umlaufgetriebe 42 an. Die Energiemaschine 40 kann motorisch oder generatorisch betreibbar sein. Die Energiemaschine 40 kann also als Generator ausgebildet sein, und insbesondere in einem Rekuperationsbetrieb den Energiespeicher aufladen. Die Energiemaschine 40 weist eine koaxial und/oder parallel zur Antriebswelle 46 ausgerichtete Rotationsachse A auf.

Die Drehzahlausgleichseinrichtung 44 ist antriebsseitig mit der Antriebswelle 46 und der Energiemaschine 40 verbunden, also insbesondere drehmoment- und/oder drehzahlübertragend verbunden sowie mechanisch und starr gekoppelt. Die Drehzahlausgleichseinrichtung 44 ist mit der oder über die mit der Antriebswelle 46 mit der Energiemaschine antreibbar. Die Drehzahlausgleichseinrichtung 44 kann abtriebsseitig zum Antrieb der Bodeneingriffsmitteln 24, 26 ausgebildet sein. Die Drehzahlausgleichseinrichtung 44 kann ein Differenzialgetriebe sein, insbesondere ein Kegelraddifferential oder Planetendifferential sein.

Wesentlich für die Erfindung ist, dass das Umlaufgetriebe 42 vorteilhafterweise zum Einstellen und/oder Verstellen der Drehzahl an der Antriebswelle 46 und/oder der Drehzahlausgleichseinrichtung 44 und/oder dem ersten Leistungsausgang 32 angeordnet ist. Alternativ oder zusätzlich kann also mit dem Umlaufgetriebe 42 vorteilhafterweise eine Drehzahl an der Antriebswelle 46 und/oder der Drehzahlausgleichseinrichtung 44 und/oder dem ersten Leistungsausgang 32 einstellbar und/oder verstellbar sein. Vorteilhafterweise kann dadurch ein konstruktiv einfache und/oder kompakter Aufbau der Antriebsanordnung 22 realisiert werden.

Figur 3 zeigt eine schematische Darstellung des zweiten Ausführungsbeispiels der erfindungsgemässen Antriebsanordnung 22. Die in Figur 3 gezeigte Antriebsanordnung 22 entspricht im Wesentlichen der in den Figuren 1 und 2 gezeigten Antriebsanordnung 22, sodass im Folgenden lediglich auf Details und/oder Unterschiede eingegangen wird. Die in Figur 1 dargestellte Arbeitsmaschine 10 kann die in Figur 3 dargestellte Antriebsanordnung 22 umfassen.

Das Umlaufgetriebe 42 ist in den Kraftfluss zwischen der Energiemaschine 40 und der Drehzahlausgleichseinrichtung 44 eingefügt ist. Mit anderen Worten, die Steuereinheit kann konfiguriert, das Umlaufgetriebe 42, insbesondere den äusseren Rotor oder den äusseren Stator, einzustellen und/oder zu verstellen, um die Drehzahl der Drehzahlausgleichseinrichtung 44 einzustellen und/oder zu verstellen.

Die Energiemaschine 40 ist direkt, insbesondere mit der oder über die Antriebswelle 46, mit dem ersten Leistungsausgang 32 verbunden. Die Energiemaschine 40 ist indirekt über das Umlaufgetriebe 42 mit der der Drehzahlausgleichseinrichtung 44 verbunden. Im Speziellen treibt die Energiemaschine 40 die Antriebswelle 46, und somit den ersten Leistungsausgang 32 und das Umlaufgetriebe 42 an.

Der ersten Leistungsausgang 32 ist antriebsseitig mit der Antriebswelle 46 und der Energiemaschine 40 verbunden, also insbesondere drehmoment- und/oder drehzahlübertragend verbunden sowie mechanisch und starr gekoppelt. Der erste Leistungsausgang 32 ist mit der oder über die Antriebswelle 46 mit der Energiemaschine antreibbar. Die Drehzahlausgleichseinrichtung 44 ist antriebsseitig mit dem Umlaufgetriebe 42 verbunden.

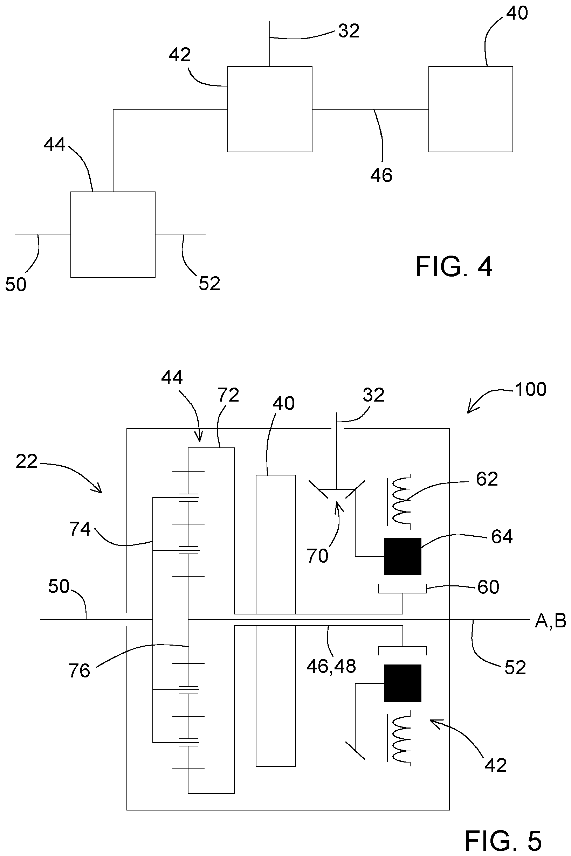

Figur 4 zeigt eine schematische Darstellung des dritten Ausführungsbeispiels der erfindungsgemässen Antriebsanordnung 22. Die in Figur 4 gezeigte Antriebsanordnung 22 entspricht im Wesentlichen der in den Figuren 1 bis 3 gezeigten Antriebsanordnung 22, sodass im Folgenden lediglich auf Details und/oder Unterschiede eingegangen wird. Die in Figur 1 dargestellte Arbeitsmaschine 10 kann die in Figur 4 dargestellte Antriebsanordnung 22 umfassen.

Das Umlaufgetriebe 42 ist in den Kraftfluss zwischen der Energiemaschine 40 und der Drehzahlausgleichseinrichtung 44 und dem ersten Leistungsausgang 32 eingefügt ist. Mit anderen Worten, die Steuereinheit kann konfiguriert, das Umlaufgetriebe 42, insbesondere den äusseren Rotor oder den äusseren Stator, einzustellen und/oder zu verstellen, um die Drehzahl der Drehzahlausgleichseinrichtung 44 und des ersten Leistungsausgangs 32 einzustellen und/oder zu verstellen.

Die Energiemaschine 40 ist direkt, insbesondere mit der oder über die Antriebswelle 46, mit dem Umlaufgetriebe 42 verbunden. Die Energiemaschine 40 ist indirekt über das Umlaufgetriebe 42 mit der Drehzahlausgleichseinrichtung 44 und dem ersten Leistungsausgang 32 verbunden. Das Umlaufgetriebe 42 ist antriebsseitig mit der Antriebswelle 46 und der Energiemaschine 40 verbunden, also insbesondere drehmoment- und/oder drehzahlübertragend verbunden sowie mechanisch und starr gekoppelt. Das Umlaufgetriebe 42 ist abtriebsseitig mit der Drehzahlausgleichseinrichtung 44 und dem ersten Leistungsausgang 32 verbunden, also insbesondere drehmoment- und/oder drehzahlübertragend verbunden sowie mechanisch und starr gekoppelt.

Die Drehzahlausgleichseinrichtung 44 ist abtriebsseitig mit einer ersten und zweiten Achsabtriebswelle 50, 52 zum Antrieb von Bodeneingriffsmitteln 24, 26 verbunden. Die in den Figuren 1 bis 3 gezeigte Drehzahlausgleichseinrichtung 44 kann abtriebsseitig auch mit einer ersten und zweiten Achsabtriebswelle 50, 52 verbunden sein.

Figur 5 zeigt eine schematische Darstellung des vierten Ausführungsbeispiels der erfindungsgemässen Antriebsanordnung 22, die insbesondere in eine Achse 100 integriert sein kann. Die in Figur 5 gezeigte Antriebsanordnung 22 entspricht im Wesentlichen der in den Figuren 1 bis 4 gezeigten Antriebsanordnung 22, sodass im Folgenden lediglich auf Details und/oder Unterschiede eingegangen wird. Die in Figur 1 dargestellte Arbeitsmaschine 10 kann die in Figur 5 dargestellte Antriebsanordnung 22 umfassen.

Das Umlaufgetriebe weist einen inneren Rotor 60, einen äusseren Rotor 62 und dazwischen einen magnetischen Modulationsring 64 auf. Der innere Rotor 60 des Umlaufgetriebes 42 ist als eine Antriebsseite und der Modulationsring 64 als Abtriebsseite ausgebildet ist. Die Energiemaschine 40 ist mit der oder über die oder durch die Antriebswelle 46 mit dem inneren Rotor 60 des Umlaufgetriebes 42 verbunden. Die Antriebswelle 46 ist als eine Hohlwelle 48 ausgebildet. Der Modulationsring 63 ist mit dem ersten Leistungsausgang 32 über ein Winkelgetriebe 70 verbunden ist. Die Drehzahlausgleichseinrichtung 44 ist als Planetendifferential, insbesondere ein Planetengetriebe mit Doppelplaneten ausgebildet. Ausserdem ist die Drehzahlausgleichseinrichtung 44, insbesondere das Umlaufrad 72 oder Hohlrad, antriebsseitig mit der Antriebswelle 46 und somit mit der Energiemaschine 40 verbunden. Abtriebsseitig ist die Drehzahlausgleichseinrichtung 44 mit den Achsabtriebswellen 50, 52 verbunden, insbesondere der Planetenträger 74 der Drehzahlausgleichseinrichtung 44 mit der ersten Achsabtriebswelle 50 und die Sonne 76 mit der zweiten Achsabtriebswelle 52.

Die Energiemaschine 40 und/oder der Stator 62 werden durch die Steuereinheit 80 derart elektrisch beaufschlagt werden, dass der erste Leistungsausgang 32 und/oder die Antriebswelle 40 mit einer vorgebbaren Drehzahl rotieren. Mit anderen Worten, die Steuereinheit 80 kann konfiguriert sein, die Energiemaschine 40 und/oder den Stator 62 elektrisch zu beaufschlagen, sodass der erste Leistungsausgang 32 und die Antriebswelle 46 mit einer vorgebbaren Drehzahl rotieren.

Die Energiemaschine 40 weist eine koaxial und/oder parallel zur Antriebswelle 46 ausgerichtete Rotationsachse A auf. Ausserdem sind die Energiemaschine 40, insbesondere die Rotationsachse A, und das Umlaufgetriebe 42, insbesondere eine Rotationsachse B des Umlaufgetriebes 42, koaxial und/oder parallel zueinander angeordnet.

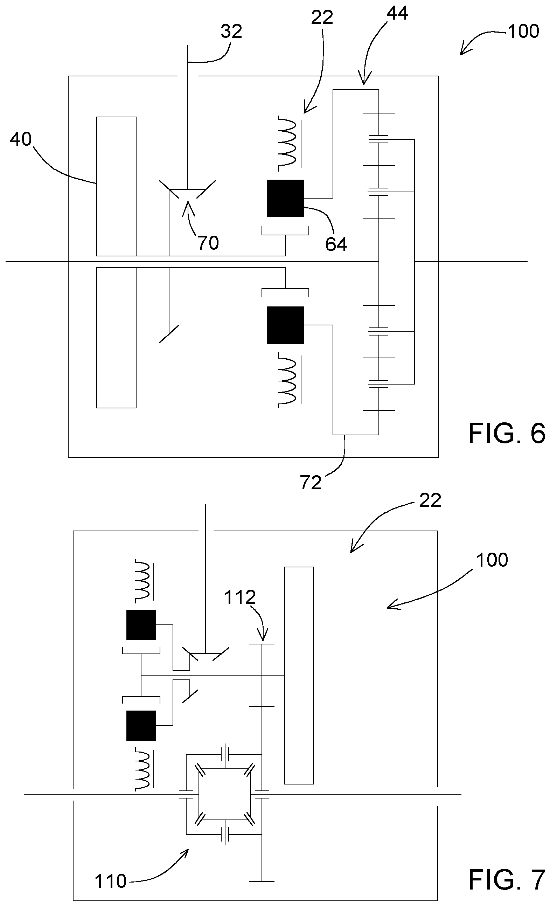

Figur 6 zeigt eine schematische Darstellung des fünften Ausführungsbeispiels der erfindungsgemässen Antriebsanordnung 22, die insbesondere in eine Achse 100 integriert sein kann. Die in Figur 6 gezeigte Antriebsanordnung 22 entspricht im Wesentlichen der in den Figuren 1 bis 5 gezeigten Antriebsanordnung 22, sodass im Folgenden lediglich auf Details und/oder Unterschiede eingegangen wird. Die in Figur 1 dargestellte Arbeitsmaschine 10 kann die in Figur 6 dargestellte Antriebsanordnung 22 umfassen.

Die Energiemaschine 40 ist mit der oder über die oder durch die Antriebswelle 46 mit dem inneren Rotor 60 des Umlaufgetriebes 42 verbunden. Ausserdem ist die Energiemaschine 40 über die Antriebswelle 46 mit dem Winkelgetriebe 70 verbunden und das Winkelgetriebe 70 mit dem ersten Leistungsausgang 32 verbunden. Die Drehzahlausgleichseinrichtung 44 ist wiederum als Planetendifferential ausgebildet. Die Drehzahlausgleichseinrichtung 44, insbesondere das Umlaufrad 72 oder Hohlrad, ist antriebsseitig mit dem Modulationsring 64 des Umlaufgetriebes 42 verbunden. Die Energiemaschine 40 ist indirekt über das Umlaufgetriebe 42 mit der der Drehzahlausgleichseinrichtung 44 verbunden.

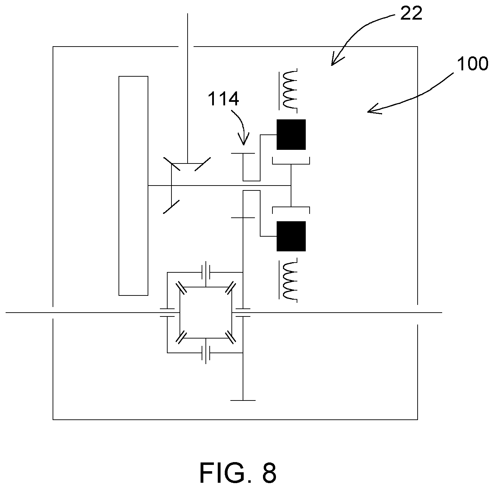

Die Figuren 7 und 8 zeigen schematische Darstellungen des sechsten und siebten Ausführungsbeispiels der erfindungsgemässen Antriebsanordnung 22, die insbesondere in eine Achse 100 integriert sein kann. Die in den Figuren 7 und 8 gezeigten Antriebsanordnung 22 entsprechen im Wesentlichen der in den Figuren 1 bis 6 gezeigten Antriebsanordnung 22, sodass im Folgenden lediglich auf Details und/oder Unterschiede eingegangen wird. Die in Figur 1 dargestellte Arbeitsmaschine 10 kann die in den Figuren 7 und 8 dargestellten Antriebsanordnung 22 umfassen.

In den Figuren 7 und 8 sind die Drehzahlausgleichseinrichtungen 44 als ein Kegelradgetriebe 110 ausgebildet. Das Kegelradgetriebe 110 kann, ähnlich wie das Winkelradgetriebe 70, winklig zueinanderstehende An- und Abtriebswellen umfassen, deren Achsen einen gemeinsamen Schnittpunkt besitzen. Die Drehmoment- bzw. Kraftübertragung kann beispielsweise mit Kegelrädern erfolgen. Das Kegelradgetriebe 110 kann eines oder mehrere Kegel-Zahnräder umfassen. In Figur 7 ist das Kegelradgetriebe 110 abtriebsseitig mit der ersten und zweiten Achsabtriebswelle 50, 52 verbunden. Antriebsseitig ist das Kegelradgetriebe 110 mit einer zweiten oder über eine zweite Übersetzungsstufe 112 mit der Antriebswelle 46 verbunden. Die Antriebswelle 46 ist als Vollwelle ausgebildet. Das Umlaufgetriebe weist einen inneren Rotor 60, einen äusseren Rotor 62 und dazwischen einen magnetischen Modulationsring 64 auf. Der innere Rotor 60 des Umlaufgetriebes 42 ist als eine Antriebsseite und der Modulationsring 64 als Abtriebsseite ausgebildet ist. Die Energiemaschine 40 ist mit der oder über die oder durch die Antriebswelle 46 mit dem inneren Rotor 60 des Umlaufgetriebes 42 verbunden. Die Antriebswelle 46 ist als eine Hohlwelle 48 ausgebildet. Der Modulationsring 63 ist mit dem ersten Leistungsausgang 32 über ein Winkelgetriebe 70 verbunden ist. Die Drehzahlausgleichseinrichtung 44 ist als Planetengetriebe mit Doppelplaneten ausgebildet (Andere Ausführung?). Ausserdem ist die Drehzahlausgleichseinrichtung 44, insbesondere das Umlaufrad 72 oder Hohlrad, antriebsseitig mit der Antriebswelle 46 und somit mit der Energiemaschine 40 verbunden. Abtriebsseitig ist die Drehzahlausgleichseinrichtung 44 mit den Achsabtriebswellen 50, 52 verbunden, insbesondere der Planetenträger 74 der Drehzahlausgleichseinrichtung 44 mit der ersten Achsabtriebswelle 50 und die Sonne 76 mit der zweiten Achsabtriebswelle 52.

Die Energiemaschine 40 und/oder der Stator 62 werden durch die Steuereinheit 80 derart elektrisch beaufschlagt werden, dass der erste Leistungsausgang 32 und/oder die Antriebswelle 40 mit einer vorgebbaren Drehzahl rotieren. Mit anderen Worten, die Steuereinheit 80 kann konfiguriert sein, die Energiemaschine 40 und/oder den Stator 62 elektrisch zu beaufschlagen, sodass der erste Leistungsausgang 32 und die Antriebswelle 46 mit einer vorgebbaren Drehzahl rotieren.

Die Energiemaschine 40 weist eine koaxial und/oder parallel zur Antriebswelle 46 ausgerichtete Rotationsachse A auf. Ausserdem sind die Energiemaschine 40, insbesondere die Rotationsachse A, und das Umlaufgetriebe 42, insbesondere eine Rotationsachse B des Umlaufgetriebes 42, koaxial und/oder parallel zueinander angeordnet.

In Figur 8 ist das Kegelradgetriebe 110 antriebsseitig mit einer vierten oder über eine vierte Übersetzungsstufe 114 mit dem Modulationsring 64 verbunden.

## Patentansprüche

1. Antriebsanordnung (22) für eine Arbeitsmaschine (10), umfassend
eine Energiemaschine (40) und eine Drehzahlausgleichseinrichtung (44) und einen ersten Leistungsausgang und ein magnetisch-elektrisches Umlaufgetriebe (42), wobei das Umlaufgetriebe (42) über eine Antriebswelle (46) mit der Energiemaschine (40) verbunden ist,
**dadurch gekennzeichnet, dass**
das Umlaufgetriebe (42) zur Einstellung und/oder Verstellung der Drehzahl des ersten Leistungsausgangs (32) und/oder der Drehzahlausgleichseinrichtung (44) angeordnet ist.

2. Antriebsanordnung (22) nach Anspruch 1, wobei das Umlaufgetriebe (42) in den Kraftfluss zwischen der Energiemaschine (40) und dem ersten Leistungsausgang (32) eingefügt ist.

3. Antriebsanordnung (22) nach Anspruch 1, wobei das Umlaufgetriebe (42) in den Kraftfluss zwischen der Energiemaschine (40) und der Drehzahlausgleichseinrichtung (44) eingefügt ist.

4. Antriebsanordnung (22) nach mindestens einem der vorangehenden Ansprüche, wobei die Drehzahlausgleichseinrichtung (44) abtriebsseitig mit einer ersten und zweiten Achsabtriebswelle (50, 52) zum Antrieb von Bodeneingriffsmitteln (24, 26) verbunden ist.

5. Antriebsanordnung (22) nach mindestens einem der vorangehenden Ansprüche, wobei die Antriebswelle (46) als eine Hohlwelle (48) ausgebildet ist.

6. Antriebsanordnung (22) nach mindestens einem der vorangehenden Ansprüche, wobei die Energiemaschine (40) eine koaxial und/oder parallel zur Antriebswelle (46) ausgerichtete Rotationsachse (A) aufweist.

7. Antriebsanordnung (22) nach mindestens einem der vorangehenden Ansprüche, wobei die Energiemaschine (40) oder das Umlaufgetriebe (42) über ein Winkelgetriebe (70) mit dem ersten Leistungsausgang (32) verbunden ist.

8. Antriebsanordnung (22) nach mindestens einem der vorangehenden Ansprüche, wobei die Energiemaschine (40), insbesondere die Rotationsachse, und das Umlaufgetriebe (42), insbesondere eine Rotationsachse des Umlaufgetriebe (B), koaxial und/oder parallel zueinander angeordnet sind.

9. Antriebsanordnung (22) nach einem der vorhergehenden Ansprüche, wobei das Umlaufgetriebe (42) einen inneren Rotor (60), einen äusseren Rotor (62) und dazwischen einen magnetischen Modulationsring (64) aufweist.

10. Antriebsanordnung (22) nach Anspruch 9, wobei der innere Rotor (60) des Umlaufgetriebes (42) als eine Antriebsseite und der Modulationsring (64) als Abtriebsseite ausgebildet ist.

11. Antriebsanordnung (22) nach Anspruch 9 oder 10, wobei die Energiemaschine (40) über die Antriebswelle (46) mit dem inneren Rotor (64) des Umlaufgetriebes (42) verbunden ist.

12. Antriebsanordnung (22) nach einem der Ansprüche 9 bis 11, wobei der erste Leistungsausgang (32) oder die Drehzahlausgleichseinrichtung (44) antriebsseitig mit dem Modulationsring (64) verbunden ist.

13. Antriebsanordnung (22) nach einem der Ansprüche 9 bis 12, wobei die Energiemaschine (40) und/oder äussere Rotor (62), insbesondere der äussere Stator (62) durch eine Steuereinheit (80) derart elektrisch beaufschlagt werden, dass der erste Leistungsausgang (32) und die Antriebswelle (46) mit einer vorgebbaren Drehzahl rotieren.

14. Achse (100) für eine Arbeitsmaschine (10), umfassend eine Antriebsanordnung (22) nach einem der Ansprüche 1 bis 13.

15. Arbeitsmaschine (10), umfassend eine Achse (100) nach Anspruch 14 oder eine Antriebsanordnung (22) nach einem der Ansprüche 1 bis 13.
